(19) Europäisches Patentamt
European Patent Office
Office européen des brevets

(11) Veröffentlichungsnummer: **0 212 515**
**B1**

(12) # EUROPÄISCHE PATENTSCHRIFT

(45) Veröffentlichungstag der Patentschrift: **13.09.89**

(51) Int. Cl.⁴: **B 01 D 53/36**, B 01 J 21/16, B 01 J 29/02

(21) Anmeldenummer: **86111029.4**

(22) Anmeldetag: **09.08.86**

(54) **Verwendung eines Katalysators zur Verringerung des Stickoxidgehalts von Verbrennungsabgasen.**

(30) Priorität: **13.08.85 DE 3529060**
**10.09.85 DE 3532226**

(43) Veröffentlichungstag der Anmeldung:
**04.03.87 Patentblatt 87/10**

(45) Bekanntmachung des Hinweises auf die Patenterteilung:
**13.09.89 Patentblatt 89/37**

(84) Benannte Vertragsstaaten:
**AT BE CH DE FR GB IT LI LU NL SE**

(56) Entgegenhaltungen:
**DE-A-2 617 744**
**DE-A-2 748 471**
**US-A-3 962 135**

(73) Patentinhaber: **SÜD- CHEMIE AG, Lenbachplatz 6, D-8000 München 2 (DE)**

(72) Erfinder: **Schneider, Michael, Dr., Waldparkstrasse 54a, D-8012 Ottobrunn-Riemerling (DE)**
Erfinder: **Kochloefl, Karl, Dr., Justus- von- Liebig-Strasse 3, D-8206 Bruckmühl/Heufeld (DE)**
Erfinder: **Maletz, Gerd, Dr., Innere Regensburger Strasse 9a, D-8300 Landshut (DE)**
Erfinder: **Wernicke, Hans Jürgen, Dr., Böhmerwaldstrasse 37g, D-8192 Geretsried (DE)**

(74) Vertreter: **Reitzner, Bruno, Dr., Patentanwälte Dipl.- Ing. R. Splanemann Dr. B. Reitzner Tal 13, D-8000 München 2 (DE)**

EP 0 212 515 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft die Verwendung eines Katalysators zur Verringerung des Stickoxidgehalts von Abgasen insbesondere von Verbrennungsabgasen.

Bei der Verbrennung fossiler Brennstoffe werden sowohl aus stickstoffhaltigen Komponenten als auch aus dem Luftstickstoff Stickoxide ($NO_x$) gebildet, welche in die Atmosphäre gelangen und eine ernste Umweltbeeinträchtigung darstellen.

Es ist bekannt, daß Stickoxide durch $NH_3$ in $N_2$ und $H_2O$ überführt werden können und daß diese Reaktion in einem weiten Temperaturbereich ziemlich selektiv ist, d.h. in Gegenwart eines hohen Sauerstoffüberschusses (wie er in Verbrennungsabgasen gewöhnlich vorhanden ist) ohne allzu hohe Ammoniakverluste infolge Oxidation abläuft, so daß nur relativ geringe Mengen an Reduktionsmittel erforderlich sind. Es sind weiterhin bereits verschiedene Katalysatoren für die $NO_x$-Reduktion mittels Ammoniak bekannt.

So ist z. B. aus der DE-AS-2 410 175 ein derartiger Katalysator aus Oxiden des Vanadiums, Molybdäns und/oder Wolframs der Stöchiometrie $V_{12-x-y}$ $Mo_x$ $W_y$ bekannt, wobei x und y durch die Beziehungen $0 \leqslant x \leqslant 8{,}0 \leqslant y \leqslant 5$ und $0{,}3 \leqslant (x + y) \leqslant 8$ festgelegt sind.

Es ist weiterhin aus der DE-PS-2 458 888 ein Verfahren zur reduktiven Zerstörung von Stickoxiden in Abgasen bekannt, bei dem ein Stickoxide, molekularen Sauerstoff und Ammoniak enthaltendes Gasgemisch mit einer Katalysatorzusammensetzung in Berührung gebracht wird, die als wesentliche Bestandteile (A) Titan in Form von Oxiden in einem innigen Gemisch mit (B) Eisen oder Vanadium in Form von Oxiden enthält.

Diese Katalysatoren haben den Nachteil, daß die als katalytisch aktive Komponenten enthaltenen relativ teuren Übergangsmetallverbindungen nur zu einem geringen Grad ausgenutzt werden, da ihre Verteilung nicht optimal ist. Es ist zwar vorgesehen, die Aktivkomponente durch inerte, feste Träger zu strecken, wodurch die Wirtschaftlichkeit zweifellos verbessert wird, doch besteht bei einer Verdünnung mit inertem Material die Gefahr, daß die katalytische Aktivität stark vermindert wird. Diese Katalysatoren haben den Nachteil, daß sie auch das im Rauchgas häufig enthaltene $SO_2$ zu $SO_3$ oxidieren, was zum Beispiel zu Salzablagerungen in nachgeschalteten Anlageteilen führen kann.

Ferner ist aus der DE-OS-3 438 367 ein Katalysator zur Verringerung des Stickoxidgehalts von Verbrennungsabgasen durch selektive Reduktion bekannt, der aus (A) 80 bis 95 Gew.-% eines schwefeloxidhaltigen katalytischen Oxids, das u.a. durch thermische Behandlung einer wäßrigen Oxidverbindung des Titans oder des Siliciums erhältlich ist, (B) 0 bis 5 Gew.-% eines Vanadiumoxid enthaltenden katalytischen Oxids und (C) 1 bis 15 Gew.-% eines katalytischen Oxids, z. B. des Wolframs, besteht.

Als wesentlich für diesen Katalysator wird die Bildung einer aus $SiO_2$ und $TiO_2$ zusammengesetzten Feststoffsäure angesehen, deren Acidität durch die Behandlung mit Schwefelsäure oder Ammoniumsulfat modifiziert wird. Man betrachtet die Feststoffsäureverteilung als maßgeblich für die Steuerung der $NH_3$-Adsorption an der Katalysatoroberfläche und damit für die Verbesserung der katalytischen Aktivität.

$SiO_2$ wird dabei in Form von Kieselsol eingesetzt. Bekanntlich erhält man aus $SiO_2$-Solen Kieselgele, welche sich durch hohe BET-Oberflächen bei gleichzeitig hoher Porosität auszeichnen, wobei aber der Makroporenanteil gering ist, was negative Auswirkungen auf den Stofftransport und damit auf die katalytische Wirksamkeit hat.

Ferner ist aus der DE-OS-2 748 471 eine Katalysatormasse zur Anwendung bei der Dampfphasenreduktion von Stickoxiden mit Ammoniak, insbesondere zur Verringerung des Stickoxidgehalts von Verbrennungsabgasen, bekannt, die im wesentlichen aus einem Oxid oder Sulfat eines der Metalle Kupfer, Vanadium, Chrom, Molybdän, Wolfram, Mangan, Eisen oder Cer auf einem geformten Träger, der Titanoxid und ein Tonmineral mit einer durchschnittlichen Teilchengröße von 0,1 bis 100 µm enthält, besteht. Es können Tonmineralien vom Typ des Montmorillonits, (z. B. Bentonit, saure Terra alba und Fullererde), des Kaolins, des Halloysits, des Pyrophyllits und des Sericits verwendet werden. Bei diesen Tonmineralien handelt es sich um Alumosilikate mit Schichtstruktur, teilweise um Dreischichtsilikate. Diese Tonmineralien werden in Mengen von bis zu 15 Gew.-% als Bindemittel verwendet, wobei lediglich eine Erhöhung der Festigkeit der Katalysatoren bezweckt wird. Bezüglich der katalytischen Wirksamkeit spielen diese Zusätze in den angegebenen Mengen keine Rolle. In größeren Mengen wirken sie sich in dieser Hinsicht sogar negativ aus; außerdem vermindern sie die Beständigkeit des Katalysators gegenüber $SO_x$-haltigen Abgasen.

Eine ähnliche Katalysatormasse zur Anwendung bei der Dampfphasenreduktion von Stickoxiden mit Ammoniak ist aus der DE-OS-2 617 744 bekannt, wobei als Trägermaterial z. B. Siliciumdioxid, Aluminiumoxid, Siliciumdioxid-Aluminiumoxid, Diatomeenerde, saurer Ton, aktivierter Ton, keramische Materialien oder Zeolith verwendet werden können.

Schließlich sind aus der US-PS-3 962 135 geformte Katalysatorträger bekannt, bei deren Herstellung Montmorillonit einer mehrstufigen Säureaktivierung unterzogen wird. In der ersten Stufe wird die Säureaktivierung nur so weit durchgeführt, daß die Plastizität des säureaktivierten Materials erhalten bleibt, so daß noch Formkörper hergestellt werden können. Der nach dieser Stufe erhaltene Ton hat einen $SiO_2$-Gehalt von mehr als etwa 70 %; seine Kristallstruktur ist im wesentlichen noch erhalten.

Die aus dem plastischen Material nach der ersten Säurebehandlung erzeugten Formkörper werden anschließend calciniert und dann nochmals einer Säureaktivierung unterzogen, wobei der $SiO_2$-Gehalt auf mehr als 80 bis 85 % erhöht wird. Anschließend erfolgt eine weitere Calcinierung. Die Säureaktivierung und Calcinierung kann noch ein oder mehrmals durchgeführt werden. Bereits nach der zweiten Säurebehandlungs- und Calcinierstufe liegt ein Material vor, dessen Gitterstruktur weitgehend zerstört ist. Der Zweck dieser

mehrfachen Säurebehandlung und Calcinierung besteht darin, den Porenradius auf mehr als 30 Å zu erhöhen. Dies ist wichtig bei den in Betracht gezogenen Reaktionen, z. B. beim Erdölcracken, beim Reformieren, Hydroformieren und bei der hydrierenden Entschwefelung, wobei die Gefahr einer Koksabscheidung sowie einer Verstopfung der Poren durch Metallverbindungen auftritt. Dieses Problem, das durch die mehrmalige Säureaktivierung und zwischengeschaltete Calcinierung des Tonminerals gelöst wird, stellt sich bei den erfindungsgemäßen verwendeten Katalysatoren nicht, da nur kleine Moleküle ($NO_x$ und $NH_3$) umgesetzt werden.

Das mehrmals säurebehandelte und calcinierte Trägermaterial kann z. B. mit Ammoniummolybdat und Kobaltnitrat belegt werden, wobei der erhaltene Katalysator zur Dampfphasenentschwefelung eines thiophenhaltigen Heptans verwendet wird.

Es wurde nun gefunden, daß durch Verwendung von in bestimmter Weise modifizierten Silikaten mit Dreischichtstruktur, die mit weiteren oxidischen Katalysatorkomponenten in synergetische Wechselwirkungen treten, Katalysatoren der vorstehend angebebenen Gattung erhalten werden können, deren Aktivität verbessert ist und mit deren Hilfe der Stickoxidgehalt von Abgasen, insbesondere von Verbrennungsabgasen bei gleichzeitiger besonders wirtschaftlicher Ausnutzung der teuren oxidischen Katalysatorkomponenten sowie des Reduktionsmittels weitgehend entfernt werden kann. Ferner wird eine $SO_x$-Beständigkeit erreicht.

Gegenstand der Erfindung ist somit die Verwendung eines Katalysators, enthaltend mindestens eines der Metalle Ti, Zr, V, W, Mo oder Ce in Form eines oder mehrerer ihrer Oxide in Kombination mit einem Silikat mit Dreischichtstruktur (Dreischichtsilikat), wobei

a) das Dreischichtsilikat ein säureaktiviertes Dreischichtsilikat, dessen kristalline Schichtstruktur noch teilweise erhalten ist, darstellt:
b) das Dreischichtsilikat vor der Säureaktivierung ein Kationenaustauschvermögen von $\geqslant$ 30 mVal/100 g hat:
c) aufgrund der Säureaktivierung die Konzentration der Zwischenschicht-Kationen erniedrigt und die BET-Oberfläche um mindestens 15 %, vorzugsweise um mindestens 50 %, bezogen auf die BET-Oberfläche des Dreischichtsilikats vor der Säureaktivierung, erhöht ist;
d) das Atomverhältnis zwischen dem in säureaktivierten Dreischichtsilikat enthaltenen Silicium und dem (den) in dem (den) Oxid(en) enthaltenen Metall(en) 0,2 bis 50, vorzugsweise 0,4 bis 25, beträgt

zur Verringerung des Stickoxidgehalts von Abgasen, insbesondere von Verbrennungsabgasen.

Unter einer "Säureaktivierung" des Drehschichtsilikats versteht man erfindungsgemäß eine Behandlung, die über den Austausch der ein- oder zweiwertigen Kationen in den Zwischenschichten durch Wasserstoffionen hinausgeht. Es wurde nämlich festgestellt, daß bei Verwendung von Dreischichtsilikaten, bei denen nur ein derartiger Ionenaustausch stattgefunden hat, keine Katalysatoren mit ausreichend hoher Aktivität erhalten werden können. Ferner ergeben Katalysatoren, die unter Verwendung von natürlichen Dreischichtsilikaten in der H-Form erhalten wurden, keine ausreichend hohen Aktivitäten, und sind gegenüber $SO_x$ nicht beständig. In gleicher Weise unbefriedigend sind auch die natürlichen und die alkalisch aktivierten Dreischichtsilikate (Alkalimetalle sind für die hier infrage kommenden Katalysatoren, Katalysatorgifte) sowie die Fullererden und die natürlich vorkommenden sauren Tone, z. B. die japanischen Niigata-Tone.

Die Säureaktivierung führt wahrscheinlich dazu, daß die Silikatschichten von den Rändern her angegriffen und die Ionen aus den Oktaederschichten herausgelöst werden. Die übrigbleibenden $SiO_4$-Tetraederbänder verursachen durch eine gewisse Keilwirkung und sterische Hinderung, insbesondere beim Trocknen, eine Desorientierung der Schichten. Die kristalline Schichtstruktur wird aber hierbei im wesentlichen nicht zerstört. Erreicht wird ein Zwischenzustand zwischen der kristallinen Struktur des ursprünglichen bzw. bereits in der H-Form vorliegenden Dreischichtsilikats und der vollständig zerstörten kristallinen Struktur der amorphen Kieselsäure.

Die Säureaktivierung führt zu einer Erhöhung der spezifischen Oberfläche, die im allgemeinen nach der BET-Methode bestimmt wird. Eine angemessen hohe spezifische Oberfläche bleibt auch nach der innigen Vermischung des säureaktivierten Schichtsilikats mit den oxidischen Komponenten des Katalysators erhalten, auch wenn diese in größeren Mengen verwendet werden. Andererseits darf die Säureaktivierung wie schon gesagt, nicht so weit geführt werden, daß nur noch amorphe Kieselsäure vorliegt, da in diesem Fall offenbar keine Wechselwirkung mit den oxidischen Komponenten des Katalysators mehr stattfindet, erkennbar an einer starken Abnahme der katalytischen Aktivität bei steigendem Kieselsäuregehalt.

Ein weiteres wesentliches Merkmal der erfindungsgemäß verwendeten Katalysators ist ferner die Verwendung eines Dreischichtsilikats, das vor der Säureaktivierung ein Kationenaustauschvermögen von $\geqslant$ 30 mVal/100 g aufweist. Der Grund, warum mit derartigen Ausgangsmaterialien besonders aktive Katalysatoren erhalten werden, ist zwar im einzelnen noch nicht geklärt, kann jedoch auf die besonders günstige kristalline Struktur der säureaktivierten Dreischichtsilikate zurückgeführt werden.

Das säureaktivierte Dreischichtsilikat geht mit den Metalloxiden eine synergetische Wechselwirkung ein. Zum gegenwärtigen Zeitpunkt kann zwar noch keine eindeutige mechanistische Erklärung für diese Wechselwirkung gegeben werden, doch scheint das Vorliegen einer durch die Säureaktivierung umorientierten silikatischen Schichtstruktur eine notwendige Voraussetzung zu sein. Verwendet man nämlich anstelle der erfindungsgemäß verwendeten säureaktivierten Dreischichtsilikate zur Umsetzung mit den oxidischen Metallkomponenten z. B. ein Kieselgel entsprechender BET-Oberfläche, so resultiert eine deutliche Abnahme der katalytischen Aktivität.

Die spezifische Oberfläche des erfindungsgemäß verwendeten säureaktivierten Dreischichtsilikats liegt vorzugsweise zwischen etwa 80 und 400 $m^2/g$.

Bei den erfindungsgemäß verwendeten Katalysatoren ist die Konzentration der Zwischenschicht-Kationen (insbesondere Na, K, Mg und Ca) aufgrund der Säureaktivierung gegenüber der Konzentration der Zwischenschichtkationen im Dreischichtsilikat vor der Säureaktivierung vorzugsweise um mindestens 12 % herabgesetzt.

Bei der Säureaktivierung werden zunächst die Kationen aus den Zwischenschichten entfernt. Bei der weiteren Säureaktivierung werden auch Kationen aus Gitterplätzen, insbesondere Aluminium und Eisen, entfernt. Damit einher geht eine Änderung der Silikatstruktur. Die Silikatschichten werden von den Rändern her von der Säure angegriffen. Es entstehen wahrscheinlich $SiO_4$-Tetraederbänder, die durch eine gewisse Keilwirkung eine Desorientierung des Dreischichtsilikats verursachen, wodurch die oxidische Katalysatorkomponente offenbar eine Wechselwirkung mit dem säureaktivierten Dreischichtsilikat eingehen kann.

Der Säureaufschluß wird im allgemeinen so weit durchgeführt, bis der $SiO_2$-Gehalt des säureaktivierten Dreischichtsilikats gegenüber dem des Ausgangsmaterials um mindestens 5 %, vorzugsweise um mindestens 10 %, zugenommen hat. Je nach Ausgangsmaterial beträgt der $SiO_2$-Gehalt dann 50 bis 90, vorzugsweise 65 bis 80 Gew.-%. Der Säureaufschluß wird hierbei nicht so weit geführt, daß nur noch röntgenamorphes $SiO_2$ hinterbleibt. Vielmehr wird der Säureaufschluß dann unterbrochen, wenn ein bestimmter Kristallinitätsgrad des säureaktivierten Dreischichtsilikats bzw. ein Anteil von nicht mehr als 45 % an extrahierbarem Silikat vorliegt. Der Anteil an extrahierbarem Silikat wird dadurch bestimmt, daß man den nach Durchführung des Säureaufschlusses erhaltenen gewaschenen und getrockneten Filterkuchen mit Sodalösung behandelt, wie von X. Otsubo, Jap.J.Chem. 72 (1951) 573, beschrieben.

Vorzugsweise beträgt der Anteil des Porenvolumens, welcher auf Makroporen mit einem Durchmesser von > 80 nm entfällt, mindestens 25 %. Das Porenvolumen wird hierbei nach der Quecksilberporosimetrie bestimmt.

Die Säureaktivierung der Dreischichtsilikat enthaltenden Ausgangsmaterialien kann in an sich bekannter Weise durchgeführt werden, wobei vorzugsweise wäßrige Mineralsäuren, wie Salzsäure oder Schwefelsäure, verwendet werden. Man kann aber auch organische Säuren, wie Ameisensäure und Essigsäure, verwenden. Die Säurekonzentration liegt im Bereich von 7 bis 60 Gew.-%, bezogen auf den Trockensubstanzgehalt, vorzugsweise im Bereich von 10 bis 40 Gew.-%. Eine vorhergehende Naßklassierung des Rohmaterials kann sich als vorteilhaft erweisen. Die säurebehandelte Masse wird mit gegebenenfalls angesäuertem Wasser gewaschen und abfiltriert.

Die erfindungsgemäß verwendeten Katalysatoren zeichnen sich auch durch eine hohe Beständigkeit gegenüber Schwefeloxiden bzw. Schwefelsäure aus, die durch die Säureaktivierung des Dreischichtsilikats bedingt ist. Es wurde festgestellt, daß Katalysatoren, die unter Verwendung von unbehandelten, H-ionenausgetauschten oder alkalisch aktivierten Dreischichtsilikaten hergestellt wurden, einem starken Angriff durch Schwefeloxide bzw. Schwefelsäure unterlagen, der zu einer mechanischen Zerstörung und zu einer vorzeitigen Alterung des Katalysators führte. Dies ist wahrscheinlich auch durch den relativ hohen Gehalt an Alkalien, die als Katalysatorgifte wirken, bedingt.

Andererseits sind Katalysatoren, die unter Verwendung von amorpher Kieselsäure hergestellt wurden, zwar gegenüber Schwefeloxiden und Schwefelsäure beständig, ihre $NO_x$-Aktivität ist jedoch deutlich schlechter.

Vorzugsweise wird ein säureaktiviertes Dreischichtsilikat vom Smektittyp, insbesondere vom Montmorillonittyp, verwendet. Das wichtigste montmorillonithaltige natürliche Mineral ist der Bentonit, der in Form von Calcium- oder Natriumbentonit vorliegen kann. Weitere Mineralien vom Smektittyp sind Hectorit und Nontronit.

Als Ausgangsverbindungen für die Metalloxid-Komponente des erfindungsgemäß verwendeten Katalysators verwendet man einmal die entsprechenden Metalloxide und zum anderen die in die Metalloxide überführbaren Substanzen, z. B. die Metalle, die Hydroxide und insbesondere die Salze, Komplexverbindungen und/oder die Sauerstoffsäuren bzw. die von diesen Säuren abgeleiteten Salze. Diese können gegebenenfalls zusammen mit einem als Reduktionsmittel und/oder Komplexbildner wirkenden Zusatz verwendet werden.

Cer kann z. B. ausgehend von $Ce_2O_3$, $CeO_2$, $Ce(SO_4)_2$ und $Ce_2(C_2O_4)_3$ eingesetzt werden. Geeignete Ausgangsstoffe für Zirkonoxid sind neben den Oxidhydraten z. B. die Zirkon- und Zirkonylsalze, wie $Zr(SO_4)_2$, $ZrCl_4$, $ZrOCl_2$ und $Zr(C_2O_4)_2$.

Als Ausgangssubstanzen für die Wolframkomponente eignen sich z. B. Wolframoxide, wie $WO_3$, $W_{10}O_{29}$, $W_4O_{11}$, $WO_2$, Mono- und Polywolframsäuren, Heteropolysäuren, Wolframate, Wolframhalogenide und -oxyhalogenide. Statt der genannten Wolframverbindungen können auch entsprechende Molybdänverbindungen einsetzt werden. Im Falle des Vanadiums stellen u.a. $V_2O_5$, $VO_2$, $V_2O_3$ und VO geeignete Ausgangsverbindungen dar, sowie Ortho- und Polyvanadinsäure, bzw. -vanadate, Vanadiumhalogenide und -oxyhalogenide, wie z. B. $VOCl_3$, verschiedene Vanadium- bzw. Vanadylsalze.

Geeignete Titanverbindungen sind neben den Oxiden und Oxidhydraten die Titan- oder Titanylsalze, insbesondere die Halogenide und die Sulfate. Vorzugsweise wird Titanylsulfat verwendet. Es können auch metallorganische Verbindungen verwendet werden, z. B. Ester der Titansäure, wie Isopropyltitanat.

Es wurde gefunden, daß besonders vorteilhafte Ergebnisse erzielt werden, wenn die Metalloxide einzeln in folgenden Konzentrationsbereichen vorliegen:

$TiO_2$ = 10 - 80 Gew.-%

$WO_3$ und/oder $MoO_3$ = 1 - 25 Gew.-%
$V_2O_5$ = 0,1 - 25 Gew.-%
$CeO_2$ = 1 - 25 Gew.-%,

wobei das säureaktivierte Dreischichtsilikat den Rest der wirksamen Komponente darstellt.

Bei den bevorzugten Katalysatoren liegen die Metalloxide in Zweierkombinationen oder in Dreierkombinationen vor.

In einer bevorzugten Zweierkombination liegen die Metalloxide in folgenden Anteilen vor:

| | |
|---|---|
| (a) ($TiO_2$ + $V_2O_5$) = | 10 - 80 Gew.-% |
| (b) ($TiO_2$ + $WO_3$ und/oder $MoO_3$) = | 10 - 80 Gew.-% |
| (c) ($TiO_2$ + $CeO_2$) = | 10 - 80 Gew.-% |
| (d) ($WO_3$ und/oder $MoO_3$+$V_2O_5$) = | 2 - 25 Gew.-% |
| (e) ($CeO_2$ + $V_2O_5$) = | 1 - 25 Gew.-% |
| (f) ($ZrO_2$ + $V_2O_5$) = | 1 - 25 Gew.-% |

wobei das säureaktivierte Dreischichtsilikat jeweils den Rest der wirksamen Komponente darstellt.

Das Gewichtsverhältnis zwischen den Metalloxiden der Zweierkombinationen umfaßt vorzugsweise jeweils folgende Bereiche:

| | |
|---|---|
| (a) $V_2O_5/TiO_2$ = | 0,001 - 0,2 |
| (b) $WO_3$ und/oder $MoO_3/TiO_2$ = | 0,1 - 0,25 |
| (c) $CeO_2/TiO_2$ = | 0,1 - 0,3 |
| (d) $V_2O_5/WO_3$ und/oder $MoO_3$ = | 0,1 - 2,5 |
| (e) $V_2O_5/CeO_2$ = | 0,1 - 1,0 |
| (f) $V_2O_5/ZrO_2$ = | 0,1 - 1,0. |

In den Dreierkombinationen liegen die Metalloxide in folgenden bevorzugten Mengenanteilen vor:

| | |
|---|---|
| (a) ($TiO_2$ + $WO_3$ und/oder $MoO_3$ + $V_2O_5$) = | 10 - 80 Gew.-% |
| (b) ($TiO_2$ + $CeO_2$ + $V_2O_5$) = | 10 - 80 Gew.-% |
| (c) ($TiO_2$ + $ZrO_2$ + $V_2O_5$) = | 10 - 80 Gew.-% |
| (d) ($WO_3$ und/oder $MoO_3$ + $CeO_2$ + $V_2O_5$) = | 10 - 25 Gew.-% |
| (e) ($WO_3$ und/oder $MoO_3$ + $ZrO_2$ + $V_2O_5$) = | 10 - 25 Gew.-% |

wobei das säureaktivierte Dreischichtsilikat jeweils den Rest der wirksamen Komponente darstellt.

Das Gewichtsverhältnis zwischen den Metalloxiden der Dreierkombination umfaßt vorzugsweise jeweils folgende Bereiche:

| | | |
|---|---|---|
| (a) | $WO_3$ und/oder $MoO_3/TiO_2$ = | 0,01 - 0,25 |
| | $V_2O_5/TiO_2$ = | 0,01 - 0,11 |
| (b) | $CeO_2/TiO_2$ = | 0,05 - 0,23 |
| | $V_2O_5/TiO_2$ = | 0,01 - 0,11 |
| (c) | $ZrO_2/TiO_2$ = | 0,01 - 0,24 |
| | $V_2O_5/TiO_2$ = | 0,01 - 0,11 |
| (d) | $CeO_2/WO_3$ und/oder $MoO_3$ = | 0,1 - 5,0 |
| | $V_2O_5/WO_3$ und/oder $MoO_3$ = | 0,1 - 2,5 |
| (e) | $V_2O_5/WO_3$ und/oder $MoO_3$ = | 0,1 - 2,5 |
| | $ZrO_2/WO_3$ und/oder $MoO_3$ = | 0,1 - 10 |

Die erfindungsgemäß verwendeten Katalysatoren sind beispielsweise durch Tränken des säureaktivierten Dreischichtsilikats mit einer Lösung die eines oder mehrere der genannten Metalle in Form von Salzen und/oder Komplexverbindungen enthält, und anschließendes Calcinieren erhältlich.

Nach einer anderen Variante kann der Katalysator dadurch erhalten werden, daß das säureaktivierte Dreischichtsilikat mit einem Oxid oder Salz eines oder mehrerer der genannten Metalle mechanisch vermischt wird (z. B. durch Vermahlen in einer Kugelmühle); anschließend wird das Gemisch gegebenenfalls mit einer Lösung getränkt, die eines oder mehrere der genannten Metalle in Form von Salzen und/oder Komplexverbindungen enthält, worauf eine Calcinierung erfolgt.

Ferner können die erfindungsgemäß verwendeten Katalysatoren durch Aus- oder Umfällen mindestens einer Verbindung, die eines oder mehrere der genannten Metalle enthält, in Gegenwart einer Suspension des säureaktivierten Dreischichtsilikats, Auswaschen der Fremdionen und anschließendes Calcinieren erhalten

werden.

Die Aus- oder Umfällung der Verbindung(en) die eines oder mehrere der genannten Metalle enthält (enthalten), kann auch in Gegenwart einer Mischsuspension des säureaktivierten Dreischichtsilikats und eines Oxids oder Salzes einer oder mehrerer der genannten Metalle erfolgen. Nach dem Auswaschen der Fremdionen erfolgt wieder eine Calcinierung.

Auf diese Weise erreicht man eine nahezu optimale innige Mischung der oxidischen Metallkomponenten mit dem säureaktivierten Dreischichtsilikat.

Besteht die oxidische Metallkomponente aus mehreren Metalloxiden, so können die jeweiligen Ausgangsverbindungen entweder gemeinsam oder in mehreren Arbeitsgängen nacheinander gefällt werden, wobei die Reihenfolge der Fällungsschritte in der Regel die katalytische Aktivität beeinflußt und im Einzelfall optimiert werden muß. Es kann sich allerdings auch als zweckmäßig erweisen, das Dreischichtsilikat, gegebenenfalls nach einem oder mehreren Fällungsschritten, mit der Lösung einer entsprechenden Übergangsverbindung zu imprägnieren. Die Imprägnierung kann dabei sowohl vor aus auch nach der Formgebung und der Calcinierung des Katalysators erfolgen.

Der erfindungsgemäß verwendete Katalysator kann auch ein inertes Trägermaterial enthalten. Der Katalysator liegt üblicherweise als Formkörper vor, insbesondere in Form von Kugeln, Tabletten, Strangpreßlingen, langgestreckten oder flachen Wabenkörpern (letztere werden aus "Kanalgitter" bezeichnet), Stäben, Rohren, Ringen, Wagenrädern oder Sattelkörpern.

Diese Formkörper können z. B. durch Tablettieren oder Strangpressen der Katalysatormasse erhalten werden, wobei gegebenenfalls Zusätze, die die Formbarkeit verbessern, beigemischt werden können. Derartige Zusätze sind beispielsweise Graphit oder Aluminiumstearat. Es können auch Zusätze, die die Oberflächenstruktur verbessern, beigemischt werden. Hierbei handelt es sich z. B. um organische Substanzen, die bei der anschlißenden Calcinierung unter Zurücklassung einer porösen Struktur verbrennen.

Die Verwendung von Zusätzen, die die Verformbarkeit verbessern, ist nicht unbedingt erforderlich, da das als Ausgangsmaterial verwendete Dreischichtsilikat, auch wenn es in einer innigen Vermischung mit der Metallkomponente vorliegt, eine plastische Verformbarkeit besitzt. Es können aber noch neutrale Bentonite oder andere Bindemittel, wie Kaolin oder Zemente, zugesetzt werden. Die Formgebung erfolgt im allgemeinen unter Zusatz von Wasser oder organischen Lösungsmitteln, z. B. von ein- oder mehrwertigen Alkoholen.

Die erfindungsgemäß verwendeten Katalysatoren werden in der Regel nach erfolgter Formgebung getrocknet und bei Temperaturen von etwa 200 bis 700°C, vorzugsweise von 300 bis 550°C calciniert. Zur Festigkeitserhöhung können außerdem anorganische faserartige Materialien vor der Verformung zugesetzt werden. Durch die Calcinierung wird der Katalysator aktiviert und erreicht auf diese Weise seine vorteilhaften Eigenschaften, insbesondere wenn die vorstehend angegebenen Temperaturbereiche eingehalten werden.

Typische Arbeitsweisen bei der Herstellung der erfindungsgemäß verwendeten Katalysatoren sind in den Beispielen beschrieben.

Die erfindungsgemäß verwendeten Katalysatoren werden vorzugsweise zur reduktiven Verringerung des Stickoxidgehalts von Verbrennungsabgasen, welche neben den üblichen Abgasbestandteilen auch Schwefeloxide ($SO_x$) enthalten, eingesetzt, wobei als Reduktionsmittel $NH_3$ verwendet wird.

Bei der Reduktion mit $NH_3$ wird der Stickoxidgehalt der Verbrennungsabgase dadurch verringert, daß sich $N_2$ und $H_2O$ bilden. Als Stickstoffverbindungen des Stickstoffs bezeichnet, wird z. B. NO, $N_2O_3$, $NO_2$, $N_2O_5$; es handelt sich jedoch vorwiegend um NO und $NO_2$, wobei NO überwiegt.

Die $NO_x$-Konzentration der zu reinigenden Abgase kann in weiten Grenzen variieren; sich liegt im allgemeinen im Bereich von 100 Vol-ppm bis 5 Vol.-%. Das molare Verhältnis $NH_3 : NO_x$ beträgt im allgemeinen 0,3 bis 3, vorzugsweise 0,6 bis 1,5, und kann durch regelungstechnische Maßnahmen in der Weise eingestellt werden, daß maximale $NO_x$-Umsätze bei möglichst niedrigem $NH_3$-Schlupf erzielt werden. Das $NH_3$ kann sowohl gasförmig als auch in Form einer wäßrigen Lösung eindosiert werden.

Die erfindungsgemäß verwendeten Katalysatoren zeichnen sich gegenüber bekannten Katalysatoren durch eine sehr weitgehende selektive Umsetzung des für die Reduktion der Stickoxide bevorzugt verwendeten Ammoniaks aus. Bei bekannten Verfahren wird, insbesondere bei höheren Betriebstemperaturen, ein beträchtlicher Teil des Ammoniaks nicht zur gewünschten $NO_x$-Entfernung verbraucht, sondern selbst durch den im Abgas vorhandenen Sauerstoff oxidiert. Dies führt zu einer zusätzlichen Stickstoffbildung bzw. vermindert den zwischen Reaktoreintritt und -austritt beobachteten $NO_x$-Umsatz und führt zu unnötigem $NH_3$-Verbrauch.

Für die Entstickungsreaktion eignen sich prinzipiell sämtliche üblicherweise für heterogen katalysierte Gasphasenreaktionen verwendete Reaktoren, sofern die Konstruktionsmerkmale des Reaktors den Durchsatz entsprechend hoher Rauchgasvolumenströme gestatten. Zulässige Raumgeschwindigkeiten (RG) liegen im Bereich von 500 bis 20 000, vorzugsweise zwischen 1000 und 15 000 Liter Gas je h und Liter Katalysator, wobei diese Raumgeschwindigkeiten sich auf ein Gas bei 0°C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 200 bis 600°C, vorzugsweise von 250 bis 430°C. Bei erheblich höheren Temperaturen kann eine Oxidation des Ammoniaks durch den im Abgas enthaltenen Sauerstoff stattfinden, wodurch der Ammoniak der Reaktion mit den Stickoxiden entzogen wird, so daß der Entstickungsgrad sinken kann. Dieser nachteilige Effekt ist jedoch bei den erfindungsgemäß verwendeten Katalysatoren nicht so stark wie bei bekannten Katalysatoren.

Im folgenden werden typische Beispiele für die Herstellung und Anwendung der erfindungsgemäß

verwendeten Katalysatoren aufgeführt.

Die Wirksamkeit der Katalysatoren hinsichtlich der Beseitigung von Stickstoffoxiden aus Gasgemischen, welche u.a. auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hat folgende Zusammensetzung:

| | |
|---|---|
| $O_2$ | 3 Vol.-% |
| $H_2O$ | 10 " |
| NO | 750 Vol-ppm |
| $NO_2$ | 50 Vol-ppm |
| $NH_3$ | 800 Vol-ppm |
| $SO_2$ | 950 Vol-ppm |
| $SO_3$ | 50 Vol-ppm |
| $N_2$ | Differenz bezüglich 100 Vol.-%. |

Die Konzentration der Komponenten NO und $NO_2$ im Gasgemisch wurde vor und nach dem Passieren der Katalysatorschüttgutschicht durch einen geeichten Analysator (Chemolumineszenzverfahren) kontinuierlich gemessen. Als Maß für die Wirksamkeit der Katalysatoren bezüglich der Reduktion der Stickoxide dient die Angabe der Umsatzgrade der Komponenten NO und $NO_2$ nach Einstellung des stationären Zustandes, definiert durch die folgenden Beziehungen:

$$\text{NO-Umsatz } (U_{NO}) = \frac{C^E_{NO} - C^A_{NO}}{C^E_{NO}} \cdot 100\ (\%)$$

$$NO_2\text{-Umsatz } (U_{NO_2}) = \frac{C^E_{NO2} - C^A_{NO2}}{C^E_{NO2}} \cdot 100\ (\%)$$

Dabei bezeichnen die Symbole $C_{NO}$ und $C_{NO_2}$ die Konzentrationen von NO und $NO_2$, wobei sich die Superskripte E und A auf den Zustand des Gasgemisches vor bzw. nach Passieren des Katalysators beziehen.

**Beispiel 1**

(a) 2 kg einer durch Hydroklassieren in wäßriger Suspension erhaltenen Rohbentonitfraktion mit einer durchschnittlichen Korngröße von 50 µm einem Kationenaustauschvermögen von 79 mVal/100 g, einer BET-Oberfläche von 69 $m^2/g$ und der in Tabelle I angegebenen chemischen Zusammensetzung werden mit 8 Liter einer wäßrigen HCl-Lösung 6 stunden bei 80°C gerührt. Der HCl-Gehalt beträgt etwa 21 Gew.-%, bezogen auf die Trockensubstanz. Man saugt ab und wäscht den Filterkuchen reichlich mit angesäuertem Wasser (mittels HCl auf einen pH-Wert von 3,5 eingestellt). Der erhaltene säureaktivierte Bentonit (nachstehend SAB genannt) hat nach dem Trocknen bei 200°C eine BET-Oberfläche von 210 $m^2/g$. Seine chemische Zusammensetzung ist ebenfalls in Tabelle I angegeben. Daraus errechnet sich eine Erniedrigung der Konzentration der Zwischenschicht-Kationen um 75 %.

(b) In eine Suspension von 320 g des in Stufe (a) erhaltenen SAB in 5 Liter Wasser trägt man unter Rühren 160 g $TiOSO_4$ ein und neutralisiert durch Zugabe von halbkonzentriertem Ammoniak. Der Feststoff wird abgesaugt, sulfatfrei gewaschen und nach Zusatz von 10 ml Glycerin zu Strangpreßlingen von 3 mm Durchmesser extrudiert. Diese werden 15 h bei 450°C calciniert.

Die Formgebung, Trocknung und Calcinierung wird in der gleichen Weise mit den Katalysatormassen nach den folgenden Beispielen durchgeführt.

Die Zusammensetzung der Katalysatoren, die Reaktionstemperaturen und die NO- bzw. $NO_2$-Umsätze bei einer Raumgeschwindigkeit von $5000 h^{-1}$ sind in Tabelle II angegeben. Für die Durchführung der Reaktionen wurde das vorstehend angegebene Gasgemisch verwendet; die NO- und $NO_2$-Umsätze wurden nach den vorstehend angegebenen Formeln berechnet.

**Beispiele 2 und 3**

Man verfährt wie im Beispiel 1 beschrieben, verwendet jedoch 640 g (Beispiel 2) bzw. 1600 g $TiOSO_4$ (Beispiel 3).

**Beispiel 4**

Eine Mischung von 400 g SAB (Stufe a von Beispiel 1) und einer Lösung von 106 g Ammoniummetawolframat in 350 ml Wasser wird gründlich geknetet.

**Beispiel 5**

Man gibt 32 g $NH_4VO_3$ portionsweise zu einer Lösung von 52 g Oxalsäuredihydrat in 350 ml Wasser und verknetet gründlich mit 475 g SAB (Stufe a von Beispiel 1).

**Beispiel 6**

In eine Suspension von 400 g SAB (Stufe a von Beispiel 1) in 5 Liter Wasser trägt man unter Rühren 180 g $TiOSO_4$ ein und neutralisiert mit halbkonzentriertem Ammoniak. Man saugt ab, wäscht sulfatfrei und vermischt innig mit einer Lösung von 10,8 g Wolframsäure in 30 ml halbkonzentriertem Ammoniak.

**Beispiel 7**

Man verfährt wie nach Beispiel 6, setzt jedoch die Ausgangsstoffe in folgenden Mengen ein:
250 g SAB, 450g $TiOSO_4$, 27,0 g Wolframsäure.

**Beispiel 8**

Der Katalysator wird nach der Arbeitsweise von Beispiel 6 hergestellt aus:
100 g SAB, 720 g $TiOSO_4$, 43,2 g Wolframsäure.

**Beispiel 9**

196 g $TiOSO_4$ werden unter Rühren in eine Suspension von 400 g SAB in 5 Liter Wasser eingetragen. Man neutralisiert mit Ammoniak, wäscht sulfatfrei und verknetet gründlich mit einer Lösung, erhalten aus 4,2 g Oxalsäuredihydrat, 2,6 g $NH_4VO_3$ und 50 ml Wasser.

**Beispiel 10**

Die Arbeitsweise von Beispiel 9 wird mit der Abwandlung wiederholt, daß man 250 g SAB, 490 g $TiOSO_4$, 10,2 g Oxalsäuredihydrat und 6,4 g $NH_4VO_3$ verwendet.

**Beispiel 11**

Anstelle der Substanzmengen von Beispiel 9 setzt man 100 g SAB, 784 g $TiOSO_4$, 16,3 g Oxalsäuredihydrat sowie 10,2 g $NH_4VO_3$ ein.

**Beispiel 12**

Man löst 46 g Oxalsäuredihydrat in 350 ml Wasser und fügt portionsweise 25,6 g $NH_4VO_3$ hinzu. Nach Zusatz von 84,6 g Ammoniummetawolframat trägt man 400 g SAB ein und verknetet die erhaltenen Masse.

**Beispiel 13**

450 g SAB werden mit den aus 25,6 g Oxalsäuredihydrat und 16 g $NH_4VO_3$ in 200 ml Wasser sowie aus 86,6 g basischem Cernitrat in 170 ml Wasser erhaltenen Lösungen versetzt und innig vermischt.

**Beispiel 14**

Eine Lösung von 25,6 g Oxalsäuredihydrat und 16 g $NH_4VO_3$ in 350 ml Wasser vermischt man nach Zusatz von 130,5 g $Zr(NO_3)_4 \cdot 5\ H_2O$ mit 450 g SAB.

**Beispiele 15 bis 23**

Die Katalysatoren nach den Beispielen 15 bis 23 werden in der nachstehend angegebenen Weise hergestellt, wobei die jeweils einzusetzenden Mengen nachstehend tabellarisch aufgeführt sind.

In eine Suspension des SAB (Stufe a von Beispiel 1) in 5 Liter Wasser trägt man unter Rühren das $TiOSO_4$ ein, neutralisiert mit Ammoniak und saugt ab. Der Feststoff wird sulfatfrei gewaschen, 15 h bei 120°C getrocknet und mit einer ammoniakalischen Wolframsäurelösung sowie der durch Reduktion des Ammoniummetavanadats mit 1,6-fachem Überschuß Oxalsäuredihydrat erhaltenen Lösung verknetet. Die Lösungsmittelmengen werden so gewählt, daß leicht knetbare pastöse Massen entstehen.

| Beispiel | SAB (g) | Titanylsulfat (g) | Wolframsäure (g) | Ammoniummetavanadat (g) |
|---|---|---|---|---|
| 15 | 400 | 180 | 9.7 | 1.3 |
| 16 | 400 | 160 | 19.4 | 2.6 |
| 17 | 400 | 180 | 5.4 | 6.4 |
| 18 | 250 | 450 | 24.3 | 3.2 |
| 19 | 250 | 400 | 48.6 | 6.4 |
| 20 | 250 | 450 | 13.5 | 16.0 |
| 21 | 100 | 720 | 38.9 | 6.1 |
| 22 | 100 | 640 | 77.8 | 10.2 |
| 23 | 100 | 720 | 21.6 | 25.6 |

Der Anteil des mittels Hg-Porosimetrie bestimmten Porenvolumens, welcher auf Makroporen mit einem Durchmesser von > 80 nm entfällt, betrug bei dem Katalysator nach Beispiel 18 67,6 %. Werte in ähnlicher Größenordnung wurden bei den anderen Katalysatoren gefunden.

**Beispiel 24**

Man vermischt 400 g SAB gründlich mit einer Lösung von 75,6 Wolframsäure und 300 ml halbkonzentriertem Ammoniak, trocknet die erhaltene Masse 15 h bei 120°C und calciniert 3 h bei 500°C. Anschließend versetzt man nacheinander mit einer Lösung von 46,2 g $Ce(OH)(NO_3)_3 \cdot 3\ H_2O$ in 175 ml Wasser sowie mit dem gleichen Volumen einer aus 20,5 g Oxalsäuredihydrat und 12,8 g $NH_4VO_3$ erhaltenen Lösung.

**Beispiel 25**

Der Katalysator wird in Analogie zum Beispiel 24 hergestellt, wobei jedoch das basische Cernitrat durch 69,6 g Zirkonnitratpentahydrat ersetzt wird.

**Beispiele 26 - 28**

Die Katalysatoren nach den Beispielen 26 bis 28 werden auf folgende Weise hergestellt:

Unter ständigem Rühren gibt man $TiOSO_4$ zu einer SAB-Suspension (Stufe a von Beispiel 1) und neutralisiert mit Ammoniak.

Der abgesaugte und sulfatfrei gewaschene Feststoff wird gründlich mit 400 ml einer Lösung vermischt, welche man durch Zugabe von basischem Cernitrat zu einer aus $NH_4VO_3$ und Oxalsäuredihydrat (1 : 1,6) erhaltenen Lösung herstellt.

Die Einsatzmengen der Ausgangskomponenten sind nachstehend tabellarisch aufgeführt.

| Beispiel | SAB (g) | Titanylsulfat (g) | bas. Cernitrathydrat (g) | $NH_4$-metavanadat (g) |
|---|---|---|---|---|
| 26 | 400 | 104 | 13.9 | 2.6 |
| 27 | 250 | 460 | 34.7 | 6.4 |
| 28 | 100 | 736 | 55.4 | 10.2 |

**Beispiele 29 - 31**

Die Katalysatormassen nach den Beispielen 29 bis 31 werden wie in den Beispielen 26 bis 28 angegeben, erhalten. Man ersetzt jedoch das basische Cernitrat durch Zirkonnitrathydrat (Beispiel 29: 20,9 g; Beispiel 30: 52,2g; Beispiel 31: 83,5 g) und verwendet die übrigen Komponenten in den angegebenen Mengen, wobei sich die Beispiele 26 und 29, 27 und 30 sowie 28 und 31 entsprechen.

**Tabelle I:** Zusammensetzung der Schichtsilikate

| Schichtsilikat | $SiO_2$ (%) | $Al_2O_3$ (%) | $Fe_2O_3$ (%) | CaO (%) | MgO (%) | $Na_2O$ (%) | $K_2O$ (%) | Glühverlust (%) |
|---|---|---|---|---|---|---|---|---|
| Rohbentonit von Beispiel 1 (Fullererde) | 54.4 | 15.5 | 6.1 | 5.9 | 4.5 | 0.3 | 1.8 | 11.5 |
| SAB +) von Beispiel 1 | 70.1 | 16.0 | 4.3 | 0.2 | 2.0 | 0.2 | 0.8 | 5.9 |
| mit $Na_2CO_3$ aktivierter Bentonit | 62.8 | 18.6 | 4.3 | 1.6 | 2.8 | 2.2 | 0.5 | 7.0 |
| natürlicher saurer Ton | 60.9 | 19.1 | 5.4 | 0.7 | 3.7 | 0.2 | 1.05 | 7.4 |

+) säureaktivierter Bentonit

**Tabelle II** Zusammensetzung der Katalysatoren und $NO_x$-Umsätze

| Beispiel | Zusammensetzung (%) | T (°C) | $U_{NO}$ (%) | $U_{NO_2}$ (%) |
|---|---|---|---|---|
| 1 | $TiO_2$ (20), SAB (80) | 300 | 49 | 80 |
| | | 350 | 88 | 100 |
| | | 400 | 87 | 100 |
| 2 | $TiO_2$ (50), SAB (50) | 300 | 51 | 80 |
| | | 350 | 90 | 100 |
| | | 400 | 84 | 100 |
| 3 | $TiO_2$ (80), SAB (20) | 300 | 61 | 90 |
| | | 350 | 92 | 100 |
| | | 400 | 83 | 100 |
| 4 | $WO_3$ (20), SAB (80) | 300 | 74 | 90 |
| | | 350 | 87 | 100 |
| | | 400 | 90 | 100 |
| 5 | $V_2O_5$ (5), SAB (95) | 250 | 38 | 70 |
| | | 300 | 68 | 100 |
| | | 350 | 82 | 100 |
| | | 400 | 82 | 100 |
| 6 | $WO_3$ (2), $TiO_2$ (18), SAB (80) | 300 | 63 | 80 |
| | | 350 | 94 | 100 |
| | | 400 | 89 | 100 |
| 7 | $WO_3$ (5), $TiO_2$ (45), SAB (50) | 300 | 57 | 90 |
| | | 350 | 96 | 100 |
| | | 400 | 91 | 100 |
| 8 | $WO_3$ (8), $TiO_2$ (72), SAB (20) | 300 | 62 | 90 |
| | | 350 | 97 | 100 |
| | | 400 | 93 | 100 |
| 9 | $V_2O_5$ (0.4), $TiO_2$ (19.6), SAB (80) | 300 | 75 | 100 |
| | | 350 | 92 | 100 |
| | | 400 | 90 | 100 |
| 10 | $V_2O_5$ (1), $TiO_2$ (49), SAB (50) | 250 | 86 | 100 |
| | | 300 | 94 | 100 |
| | | 350 | 94 | 100 |
| | | 400 | 92 | 100 |
| 11 | $V_2O_5$ (1.6), $TiO_2$ (78.4), SAB (20) | 250 | 92 | 100 |

| | | | | |
|---|---|---|---|---|
| | | 300 | 95 | 100 |
| | | 350 | 94 | 100 |
| | | 400 | 89 | 100 |
| 12 | $V_2O_5$ (4), $WO_3$ (16), SAB (80) | 250 | 82 | 100 |
| | | 300 | 86 | 100 |
| | | 350 | 89 | 100 |
| | | 400 | 87 | 100 |
| 13 | $V_2O_5$ (2.5), $CeO_2$, (7.5), SAB (90) | 250 | 63 | 90 |
| | | 300 | 76 | 100 |
| | | 350 | 92 | 100 |
| | | 400 | 88 | 100 |
| 14 | $V_2O_5$ (2.5), $ZrO_2$ (7.5), SAB (90) | 300 | 64 | 90 |
| | | 350 | 80 | 100 |
| | | 400 | 80 | 100 |
| 15 | $V_2O_5$ (0.2) $WO_3$ (1.8), $TiO_2$ (18), SAB (80) | 250 | 76 | 100 |
| | | 300 | 32 | 100 |
| | | 350 | 93 | 100 |
| | | 400 | 92 | 100 |
| 16 | $V_2O_5$ (0.4), $WO_3$ (3.6), $TiO_2$ (16), SAB (80) | 250 | 83 | 100 |
| | | 300 | 95 | 100 |
| | | 350 | 97 | 100 |
| | | 400 | 96 | 100 |
| 17 | $V_2O_5$ (1), $WO_3$ (1), $TiO_2$ (18), SAB (80) | 250 | 87 | 100 |
| | | 300 | 97 | 100 |
| | | 350 | 98 | 100 |
| | | 400 | 95 | 100 |
| 18 | $V_2O_5$ (0.5), $WO_3$ (4.5), $TiO_2$ (45), SAB (50) | 250 | 85 | 100 |
| | | 300 | 97 | 100 |
| | | 350 | 97 | 100 |
| | | 400 | 93 | 100 |
| 19 | $V_2O_5$ (1), $WO_3$ (9), $TiO_2$ (40), SAB (50) | 250 | 86 | 100 |
| | | 300 | 97 | 100 |
| | | 350 | 97 | 100 |
| | | 400 | 92 | 100 |
| 20 | $V_2O_5$ (2.5), $WO_3$ (2.5), $TiO_2$ (45), SAB (50) | 250 | 88 | 100 |
| | | 300 | 98 | 100 |
| | | 350 | 99 | 100 |
| | | 400 | 91 | 100 |
| 21 | $V_2O_5$ (0.8), $WO_3$ (7.2), $TiO_2$ (72), SAB (20) | 250 | 93 | 100 |
| | | 300 | 98 | 100 |
| | | 350 | 98 | 100 |
| | | 400 | 91 | 100 |
| 22 | $V_2O_5$ (1.6), $WO_3$ (14.4), $TiO_2$ (64), SAB (20) | 250 | 94 | 100 |
| | | 300 | 99 | 100 |
| | | 350 | 99 | 100 |
| | | 400 | 93 | 100 |
| 23 | $V_2O_5$ (4), $WO_3$ (4), $TiO_2$ (72), SAB (20) | 250 | 96 | 100 |
| | | 300 | 99 | 100 |
| | | 350 | 100 | 100 |
| | | 400 | 91 | 100 |
| 24 | $V_2O_5$ (2), $WO_3$ (14), $CeO_2$ (4), SAB (80) | 300 | 90 | 100 |
| | | 350 | 93 | 100 |
| | | 400 | 91 | 100 |
| 25 | $V_2O_5$ (2), $WO_3$ (14), $ZrO_2$ (4), SAB (80) | 300 | 86 | 100 |
| | | 350 | 90 | 100 |
| | | 400 | 88 | 100 |
| 26 | $V_2O_5$ (0.4), $CeO_2$ (1.2), $TiO_2$ (18.4), SAB (80) | 250 | 74 | 100 |
| | | 300 | 91 | 100 |
| | | 350 | 95 | 100 |
| | | 400 | 94 | 100 |
| 27 | $V_2O_5$ (1), $CeO_2$ (3), $TiO_2$ (46), SAB (50) | 250 | 79 | 100 |
| | | 300 | 95 | 100 |
| | | 350 | 96 | 100 |
| | | 400 | 94 | 100 |
| 28 | $V_2O_5$ (1.6), $CeO_2$ (4.8), $TiO_2$ (73.6), SAB (20) | 250 | 85 | 100 |

| | | | | |
|---|---|---|---|---|
| | | 300 | 97 | 100 |
| | | 350 | 94 | 100 |
| | | 400 | 88 | 100 |
| 29 | $V_2O_5$ (0.4), $ZrO_2$ (1.2), $TiO_2$ (18.4), SAB (80) | 250 | 70 | 100 |
| | | 300 | 89 | 100 |
| | | 350 | 95 | 100 |
| | | 400 | 93 | 100 |
| 30 | $V_2O_5$ (1), $ZrO_2$ (3), $TiO_2$ (46), SAB (50) | 250 | 77 | 100 |
| | | 300 | 96 | 100 |
| | | 350 | 95 | 100 |
| | | 400 | 89 | 100 |
| 31 | $V_2O_5$ (1.6), $ZrO_2$ (4.8), $TiO_2$ (73.6), SAB (20) | 250 | 82 | 100 |
| | | 300 | 95 | 100 |
| | | 350 | 94 | 100 |
| | | 400 | 0 | 100 |

SAB = säureaktivierter Bentonit

**Vergleichsbeispiele V1 bis V8**

In Analogie zu den Katalysatoren nach den Beispielen 15 und 18 ($V_2O_5$, $WO_3$, $TiO_2$ mit 80 bzw. 50 % SAB) wurden zu Vergleichszwecken die Katalysatoren V1 bis V8 hergestellt, welche anstelle des säureaktivierten Bentonits (Stufe a von Beispiel 1) nicht erfindungsgemäße silikatische Bestandteile enthalten.

Die chemische Zusammensetzung der silikatischen Bestandteile ist in Tabelle I angegeben, die Zusammensetzung der Vergleichskatalysatoren sowie die mit diesen erreichten NO-Umsätze sind in Tabelle III angegeben. Für die Versuche wurde ein Gasgemisch mit der vorstehend genannten Zusammensetzung verwendet.

Die BET-Oberflächen der für die Vergleichskatalysatoren verwendeten silikatischen Bestandteile waren wie folgt:

Rohbentonit (Fullererde): 69 $m^2/g$; mit $Na_2CO_3$ aktivierter Bentonit: 41 $m^2/g$; natürlicher saurer Ton: 83 $m^2/g$; amorphe Kieselsäure: 325 $m^2/g$.

Unter Berücksichtigung der mit den entsprechenden silikatischen Bestandteilen ohne Zusatz weiterer oxidischer Katalysatorkomponenten erhaltenen Ergebnisse lassen sich die maximalen Stickoxidumsätze in Abhängigkeit vom Gewichtsanteil des entsprechenden silikatischen Bestandteils graphisch darstellen. Fig. 1 zeigt klar, daß die erfindungsgemäßen Katalysatoren eine signifikant höhere Wirksamkeit besitzen.

Die Versuche mit den Vergleichsbeispielen V1 bis V6 demonstrieren die Notwendigkeit der Säureaktivierung. Katalysatoren, welche unter Verwendung von nicht aktiviertem (V1, V2) bzw. alkalisch aktiviertem Bentonit (V3, V4) hergestellt wurden, sind bezüglich des NO-Umsatzgrades ebenso unterlegen wie ein Katalysator, der nicht aktivierten natürlichen sauren Ton (vergleichbar einem H-ionenausgetauschten Ton) enthält (V5, V6). Besonders deutlich wird dies bei einem hohen Gehalt an silikatischem Bestandteil.

**Tabelle III** Zusammensetzung der Vergleichskatalysatoren und NO-Umsätze

| Beispiel | Silikatischer Bestandteil | (%) | $V_2O_5$ (%) | $WO_3$ (%) | $TiO_2$ (%) | NO -Umsatz (%) 300°C | 350°C | 400°C |
|---|---|---|---|---|---|---|---|---|
| 18 | Säureaktivierter Bentonit | 50 | 0.5 | 4.5 | 45 | 97 | 97 | 93 |
| 15 | " | 80 | 0.2 | 1.8 | 18 | 92 | 93 | 92 |
| V1 | Rohbentonit (Fullererde) | 50 | 0.5 | 4.5 | 45 | 84 | 77 | 66 |
| V2 | " | 80 | 0.2 | 1.8 | 18 | 53 | 59 | 58 |
| V3 | $Na_2CO_3$-aktivierter Bentonit | 50 | 0.5 | 4.5 | 45 | 60 | 64 | 59 |
| V4 | " | 80 | 0.2 | 1.8 | 18 | 31 | 38 | 38 |
| V5 | natürlicher saurer Ton | 50 | 0.5 | 4.5 | 45 | 87 | 90 | 86 |
| V6 | " | 80 | 0.2 | 1.8 | 18 | 68 | 76 | 65 |
| V7 | amorphe Kieselsäure | 50 | 0.5 | 4.5 | 45 | 94 | 95 | 92 |
| V8 | " | 80 | 0.2 | 1.8 | 18 | 26 | 43 | 47 |

Der Katalysator nach Beispiel 18 wurde ferner mit einem bekannten Katalysator hinsichtlich der Ausnutzung des Reduktionsmittels Ammoniak für die Reduktion von NO verglichen. Der bekannte Katalysator enthielt lediglich die oxidischen Katalysatorkomponenten ohne säureaktivierten Bentonit in folgender Zusammensetzung:

$V_2O_5$: 1,0 Gew.-%
$WO_3$: 9,0 Gew.-%

$TiO_2$: 90,0 Gew.-%

Dieser Katalysator wurde mit dem erfindungsgemäßen Katalysator gemäß Beispiel 18 mit einem Gasgemisch entsprechend der vorstehend angegebenen Zusammensetzung bei einer Raumgeschwindigkeit von jeweils 5000 $h^{-1}$ getestet. Aus der Bilanz der umgesetzten Reaktionspartner läßt sich der tatsächlich zur $NO_x$-Reduktion verbrauchte prozentuale Anteil des dem Reaktor zugeführten Ammoniaks ermitteln. Dieser Anteil ist in Fig. 2 als Funktion der Reaktortemperatur aufgetragen.

Bei dem Vergleichskatalysator wird ein beträchtlicher Teil des Ammoniaks durch den im Abgas vorhandenen Sauerstoff oxidiert und steht daher nicht mehr für die gewünschte NO-Entfernung zur Verfügung. Der erfindungsgemäße Katalysator katalysiert dagegen die unerwünschte Oxidation des Ammoniaks durch Sauerstoff weit weniger.

## Patentansprüche

1. Verwendung eines Katalysators, enthaltend mindestens eines der Metalle Ti, Zr, V, W, Mo oder Ce in Form eines oder mehrerer ihrer Oxide in Kombination mit einem Silikat mit Dreischichtstruktur (Dreischichtsilikat), wobei

a) das Dreischichtsilikat ein säureaktiviertes Dreischichtsilikat, dessen kristalline Schichtstruktur noch teilweise erhalten ist, darstellt;
b) das Dreischichtsilikat vor der Säureaktivierung ein Kationenaustauschvermögen von $\geqslant$ 30 mVal/100 g hat;
c) aufgrund der Säureaktivierung die Konzentration der Zwischenschicht-Kationen erniedrigt und die BET-Oberfläche um mindestens 15 %, vorzugsweise um mindestens 50 %, bezogen auf die BET-Oberfläche des Dreischichtsilikats vor der Säureaktivierung, erhöht ist;
d) das Atomverhältnis zwischen dem im säureaktivierten Dreischichtsilikat enthaltenen Silicium und dem (den) in dem (den) Oxid(en) enthaltenen Metall(en) 0,2 bis 50, vorzugsweise 0,4 bis 25, beträgt

zur Verringerung des Stickoxidgehalts von Abgasen, insbesondere von Verbrennungsabgasen.

2. Verwendung nach Anspruch 1, dadurch gekennzeichnet, daß die Konzentration der Zwischenschicht-Kationen durch die Säureaktivierung gegenüber der Konzentration der Zwischenschicht-Kationen im Dreischichtsilikat vor der Säureaktivierung um mindestens 12 % erniedrigt ist.

3. Verwendung nach Anspruch 1 oder 2, dadurch gekennzeichnet, daß der $SiO_2$-Gehalt des säureaktivierten Dreischichtsilikats gegenüber dem des Ausgangsmaterials um mindestens 5 %, vorzugsweise um mindestens 10 %, erhöht ist.

4. Verwendung nach einem der Ansprüche 1 bis 3, dadurch gekennzeichnet, daß der Anteil des Porenvolumens welcher auf Makroporen mit einem Durchmesser von > 80 nm entfällt, mindestens 25 % beträgt.

5. Verwendung nach einem der Ansprüche 1 bis 4, dadurch gekennzeichnet, daß die Metalloxide einzeln in folgenden Konzentrationsbereichen vorliegen:

$TiO_2$ = 10 - 80 Gew.-%
$WO_3$ und/oder $MoO_3$ = 1 - 25 Gew.-%
$V_2O_5$ = 0,1 - 25 Gew.-%
$CeO_2$ = 1 - 25 Gew.-%,

wobei das säureaktivierte Dreischichtsilikat den Rest der wirksamen Komponente darstellt.

6. Verwendung nach einem der Ansprüche 1 bis 5, dadurch gekennzeichnet, daß die Metalloxide in einer der Folgenden Zweierkombinationen vorliegen:

| | |
|---|---|
| (a) ($TiO_2$ + $V_2O_5$) = | 10 - 80 Gew.-% |
| (b) ($TiO_2$ + $WO_3$ und/oder $MoO_3$) = | 10 - 80 Gew.-% |
| (c) ($TiO_2$ + $CeO_2$) = | 10 - 80 Gew.-% |
| (d) ($WO_3$ und/oder $MoO_3$+$V_2O_5$) = | 2 - 25 Gew.-% |
| (e) ($CeO_2$ + $V_2O_5$) = | 1 - 25 Gew.-% |
| (f) ($ZrO_2$ + $V_2O_5$) = | 1 - 25 Gew.-% |

wobei das säureaktivierte Dreischichtsilikat jeweils den Rest der wirksamen Komponente darstellt.

7. Verwendung nach Anspruch 6, dadurch gekennzeichnet, daß das Gewichtsverhältnis zwischen den Metalloxiden der Zweierkombinationen jeweils folgende Bereich umfaßt:

| | |
|---|---|
| (a) $V_2O_5/TiO_2$ = | 0,001 - 0,2 |
| (b) $WO_3$ und/oder $MoO_3/TiO_2$ = | 0,1 - 0,25 |
| (c) $CeO_2/TiO_2$ = | 0,1 - 0,3 |
| (d) $V_2O_5/WO_3$ und/oder $MoO_3$ = | 0,1 - 2,5 |

| | |
|---|---|
| (e) $V_2O_5/CeO_2$ = | 0,1 - 1,0 |
| (f) $V_2O_5/ZrO_2$ = | 0,1 - 1,0. |

8. Verwendung nach einem der Ansprüche 1 bis 5, dadurch gekennzeichnet, daß die Metalloxide in einer der folgenden Dreierkombinationen vorliegen:

| | |
|---|---|
| (a) ($TiO_2$ + $WO_3$ und/oder $MoO_3$ + $V_2O_5$) = | 10 - 80 Gew.-% |
| (b) ($TiO_2$ + $CeO_2$ + $V_2O_5$) = | 10 - 80 Gew.-% |
| (c) ($TiO_2$ + $ZrO_2$ + $V_2O_5$) = | 10 - 80 Gew.-% |
| (d) ($WO_3$ und/oder $MoO_3$ + $CeO_2$ + $V_2O_5$) = | 10 - 25 Gew.-% |
| (e) ($WO_3$ und/oder $MoO_3$ + $ZrO_2$ + $V_2O_5$) = | 10 - 25 Gew.-% |

wobei das säureaktivierte Dreischichtsilikat, jeweils den Rest der wirksamen Komponente darstellt.

9. Verwendung nach Anspruch 8, dadurch gekennzeichnet, daß das Gewichtsverhältnis zwischen den Metalloxiden der Dreierkombination jeweils folgende Bereiche umfaßt.

| | | |
|---|---|---|
| (a) | $WO_3$ und/oder $MoO_3/TiO_2$ = | 0,01 - 0,25 |
| | $V_2O_5/TiO_2$ = | 0,01 - 0,11 |
| (b) | $CeO_2/TiO_2$ = | 0,05 - 0,23 |
| | $V_2O_5/TiO_2$ = | 0,01 - 0,11 |
| (c) | $ZrO_2/TiO_2$ = | 0,01 - 0,24 |
| | $V_2O_5/TiO_2$ = | 0,01 - 0,11 |
| (d) | $CeO_2/WO_3$ und/oder $MoO_3$ = | 0,1 - 5,0 |
| | $V_2O_5/WO_3$ und/oder $MoO_3$ = | 0,1 - 2,5 |
| (e) | $V_2O_5/WO_3$ und/oder $MoO_3$ = | 0,1 - 2,5 |
| | $ZrO_2/WO_3$ und/oder $MoO_3$ = | 0,1 - 10 |

10. Verwendung nach einem der Ansprüche 1 bis 9, dadurch gekennzeichnet, daß der Katalysator als Formkörper, insbesondere in Form von Kugeln, Tabletten, Strangpreßlingen, langgestreckten oder flachen Wabenkörpern, Stäben, Rohren, Ringen, Wagenrädern oder Sattelkörpern vorliegt.

11. Verwendung nach einem der Ansprüche 1 bis 10, dadurch gekennzeichnet, daß der Katalysator durch Tränken des säureaktivierten Dreischichtsilikats mit einer Lösung, die eines oder mehrere der genannten Metalle in Form von Salzen und/oder Komplexverbindungen enthält, und anschließendes Calcinieren erhältlich ist.

12. Verwendung nach einem der Ansprüche 1 bis 10, dadurch gekennzeichnet, daß der Katalysator durch mechanisches Vermischen des säureaktivierten Dreischichtsilikats mit einem Oxid oder Salz eines oder mehrerer der genannten Metalle, anschließendes Tränken mit einer Lösung, die eines oder mehrere der genannten Metalle in Form von Salzen und/oder Komplexverbindungen enthält, und anschließendes Calcinieren erhältlich ist.

13. Verwendung nach einem der Ansprüche 1 bis 10, dadurch gekennzeichnet, daß der Katalysator durch Aus- oder Umfällen mindestens einer Verbindung, die eines oder mehrere der genannten Metalle enthält, in Gegenwart einer Suspension der säureaktivierten Dreischichtsilikats, Auswaschen der Fremdionen und anschließendes Calcinieren erhältlich ist.

14. Verwendung nach einem der Ansprüche 1 bis 10 dadurch gekennzeichnet, daß der Katalysator durch Aus- oder Umfällen mindestens einer Verbindung, die eines oder mehrere der genannten Metalle enthält, in Gegenwart einer Mischsuspension des säureaktivierten Dreischichtsilikats und eines Oxids oder Salzes einer oder mehrerer der genannten Metalle, Auswaschen der Fremdionen und anschließendes Calcinieren erhältlich ist.

15. Verwendung nach einem der Ansprüche 1 bis 14, zur reduktiven Verringerung des Stickoxidgehalts von Verbrennungsabgasen, welche neben den üblichen Abgasbestandteilen auch Schwefeloxide enthalten, wobei als Reduktionsmittel $NH_3$ verwendet wird.

16. Verwendung nach Anspruch 15 im Temperaturbereich 200 bis 600°C, vorzugsweise von 250 bis 430°C, und bei einer Raumgeschwindigkeit im Bereich von 500 bis 20 000 Liter Verbrennungsabgase je Stunde und Liter Katalysator.

## Claims

1. Use of a catalyst containing at least one of the metals Ti, Zr, V, W, Mo or Ce in the form of one or more of their oxides, in combination with a silicate with a three-layer structure (three-layer silicate), wherein

a) the three-layer silicate represents an acid-activated three-layer silicate whose crystalline layer structure is

substantially retained,

b) before acid activation, the three-layer silicate has a cation-exchange capacity of ⩾ 30 mVal/100 g,

c) as a result of acid activation, the concentration of the interlayer cations is decreased and the B.E.T. surface area is increased by at least 15 %, preferably by at least 50 %, in relation to the B.E.T. surface area of the three-layer silicate before acid activation,

d) the atomic ratio of the silicon contained in the acid-activated three-layer silicate to the metal or metals contained in the oxide or oxides is 0.2 to 50, preferably 0.4 to 25,

for decreasing the nitrogen oxide content of waste gases, in particular waste gases of combustion.

2. Use according to Claim 1, characterised in that, as a result of the acid activation, the concentration of the interlayer cations is decreased by at least 12 % relative to the concentration of the interlayer cations in the three-layer silicate before acid activation.

3. Use according to Claim 1 or 2, characterised in that the $SiO_2$ content of the acid-activated three-layer silicate is at least 5 %, preferably at least 10 %, higher than that of the starting material.

4. Use according to any one of Claims 1 to 3, characterised in that the proportion of the pore volume which accounts for macropores with a diameter of > 80 nm is at least 25 %.

5. Use according to any one of Claims 1 to 4, characterised in that the metal oxide are present individually in the following ranges of concentration:

$TiO_2$ = 10 - 80 % by weight
$WO_3$ and/or $MoO_3$ = 1 - 25 % by weight
$V_2O_5$ = 0.1 - 25 % by weight
$CeO_2$ = 1 - 25 % by weight

wherein the acid-activated three-layer silicate constitutes the rest of the active component.

6. Use according to any one of Claims 1 to 5, characterised in that the metal oxides are present in one of the following binary combinations:

| | |
|---|---|
| (a) ($TiO_2$ + $V_2O_5$) = | 10 - 80 % by weight |
| (b) ($TiO_2$ + $WO_4$ and/or $MoO_3$) = | 10 - 80 % by weight |
| (c) ($TiO_2$ + $CoO_2$) = | 10 - 80 % by weight |
| (d) ($WO_3$ and/or $MoO_3$ + $V_2O_5$) = | 2 - 25 % by weight |
| (e) ($CeO_2$ + $V_2O_5$) = | 1 - 25 % by weight |
| (f) ($ZrO_2$ + $V_2O_5$) = | 1 - 25 % by weight |

wherein the acid-activated three-layer silicate respectively constitutes the rest of the active component.

7. Use according to Claim 6, characterised in that the weight ratio between the metal oxides of the binary combination respectively comprises the following ranges:

| | |
|---|---|
| (a) $V_2O_5/TiO_2$ = | 0.001 - 0.2 |
| (b) $WO_3$ and/or $MoO_3/TiO_2$ = | 0.1 - 0.25 |
| (c) $CeO_2/TiO_2$ = | 0,1 - 0.3 |
| (d) $V_2O_5/WO_3$ and/or $MoO_3$ = | 0.1 - 2.5 |
| (e) $V_2O_5/CeO_2$ = | 0.1 - 1.0 |
| (f) $V_2O_5/ZrO_2$ = | 0.1 - 1.0. |

8. Use according to any one of Claims 1 to 5, characterised in that the metal oxides are present in one of the following ternary combinations:

| | |
|---|---|
| (a) ($TiO_2$ + $WO_3$ and/or $MoO_3$ + $V_2O_5$) = | 10 - 80 % by weight |
| (b) ($TiO_2$ + $CeO_2$ + $V_2O_5$) = | 10 - 80 % by weight |
| (c) ($TiO_2$ + $ZrO_2$ r $V_2O_5$) = | 10 - 80 % by weight |
| (d) ($WO_3$ and/or $MoO_3$ + $CeO_2$ + $V_2O_5$) = | 10 - 25 % by weight |
| (e) ($WO_3$ and/or $MoO_3$ + $ZrO_2$ + $V_2O_5$) = | 10 - 25 % by weight |

wherein the acid-activated three-layer silicate respectively constitutes the rest of the active component.

9. Use according to Claim 8, characterised in that the weight ratio between the metal oxides of the ternary combination respectively comprises the following ranges:

| | | |
|---|---|---|
| (a) | $WO_3$ and/or $MoO_3/TiO_2$ = | 0.01 - 0.25 |
| | $V_2O_5/TiO_2$ = | 0.01 - 0.11 |
| (b) | $CeO_2/TiO_2$ = | 0.05 - 0.23 |
| | $V_2O_5/TiO_2$ = | 0.01 - 0.11 |

(c) $ZrO_2/TiO_2$ = 0.01 - 0.24
$V_2O_5/TiO_2$ = 0.01 - 0.11

(d) $CeO_2/WO_3$ and/or $MoO_3$ = 0.1 - 5.0
$V_2O_5/WO_3$ and/or $MoO_3$ = 0.1 - 2.5

(e) $V_2O_5/WO_3$ and/or $MoO_3$ = 0.1 - 2.5
$ZrO_2/WO_3$ and/or $MoO_3$ = 0.1 - 10.

10. Use according to any one of Claims 1 to 9, characterised in that the catalyst is provided in the form of shaped bodies, in particular in the form of spheres, pellets, extrusions, oblong or flat honeycombs, plates, rods, tubes, rings, wagon wheels or saddles.

11. Use according to any one of Claims 1 to 10, characterised in that the catalyst is produced by impregnating the acid-activated three-layer silicate with a solution containing one or more of said metals in the form of salts and/or complex compounds, and subsequent calcination.

12. Use according to any one of Claims 1 to 10, characterised in that the catalyst is produced by mechanical mixing of the acid-activated three-layer silicate with an oxide or salt of one or more of said metals, subsequent impregnation with a solution containing one or more of said metals in the form of salts and/or complex compounds, and subsequent calcination.

13. Use according to any one of Claims 1 to 10, characterised in that the catalyst is produced by precipitating or reprecipitating at least one compound containing one or more of said metals in the presence of a suspension of the acid-activated three-layer silicate, washing out the foreign ions and subsequent calcination.

14. Use according to any one of Claims 1 to 10, characterised in that the catalyst is produced by precipitating or reprecipitating at least one compound containing one or more said metals in the presence of a mixed suspension of the acid-activated three-layer silicate and of an oxide or salt of one or more of said metals, washing out the foreign ions and subsequent calcination.

15. Use according to any one of Claims 1 to 14, for reductively decreasing the nitrogen oxide content of waste gases of combustion which, in addition to the usual waste gas constituents, also contain sulphur oxides, wherein $NH_3$ is used as the reducing agent.

16. Use according to Claim 15 in the temperature range of from 200 to 600°C, preferably from 250 to 430°C, and at a spatial velocity in the range of from 500 to 20,000 litres of waste gases of combustion per hour and litre of catalyst.

## Revendications

1. Utilisation d'un catalyseur renfermant au moins l'un des métaux Ti, Zr, V, W, Mo ou Ce, sous la forme d'un ou plusieurs de leurs oxydes, en combinaison avec un silicate présentant une structure à trois feuillets (silicate à trois feuillets) où:

a) le silicate à trois feuillets représente un silicate à trois feuillets activé par un acide, dont la structure cristalline en feuillets est pour l'essentiel encore maintenue;
b) le silicate à trois feuillets présente, avant l'activation par un acide, une capacité d'échange de cations supérieure ou égale à 30 mEq/100 g;
c) en raison de l'activation par un acide, la concentration des cations des feuillets intermédiaires est abaissée, et la surface spécifique BET est augmentée d'au moins 15 %, de préférence, d'au moins 50 %, par rapport à la surface spécifique BET du silicate à trois feuillets avant l'activation par un acide;
d) le rapport atomique entre le silicium contenu dans le silicate à trois feuillets activé par un acide et le (ou les) métal (métaux) contenu(s) dans le (ou les) oxyde(s) s'élève à 0,2 à 50, de préférence à 0,4 à 25,

pour la diminution du taux d'oxydes d'azote des gaz d'échappement, en particulier des gaz d'échappement de combustion.

2. Utilisation selon la revendication 1, caractérisée par le fait que la concentration des cations des feuillets intermédiaires est diminuée d'au moins 12 % par l'activation par un acide, vis-à-vis de la concentration des cations des feuillets intermédiaires dans le silicate à trois feuillets avant l'activation par un acide.

3. Utilisation selon la revendication 1 ou 2, caractérisée par le fait que la teneur en $SiO_2$ du silicate à trois feuillets activé par un acide est augmentée, vis-à-vis de celle de la matière de départ, d'au moins 5 %, de préférence d'au moins 10 %.

4. Utilisation selon l'une des revendications 1 à 3, caractérisée par le fait que la fraction du volume des pores, qui revient aux macropores présentant un diamètre de plus de 80 nm, s'élève à au moins 25 %.

5. Utilisation selon l'une des revendications 1 à 4, caractérisée par le fait que les oxydes métalliques sont présents individuellement dans les plages de concentrations suivantes:

$TiO_2$ = 10 - 80 % en poids
$WO_3$ et/ou $MoO_3$ = 1 - 25 % en poids

$V_2O_5$ = 0,1 - 25 % en poids
$CeO_2$ = 1 - 25 % en poids,

où le silicate à trois feuillets activé par un acide représente le reste du composant actif.

6. Utilisation selon l'une des revendications 1 à 5, caractérisée par le fait que les oxydes métalliques sont présents dans l'une des combinaisons binaires suivantes:

| | |
|---|---|
| (a) ($TiO_2$ + $V_2O_5$) = | 10 - 80 % en poids |
| (b) ($TiO_2$ + $WO_3$ et/ou $MoO_3$) = | 10 - 80 % en poids |
| (c) ($TiO_2$ + $CeO_2$) = | 10 - 80 % en poids |
| (d) ($WO_3$ et/ou $MoO_3$ + $V_2O_5$) = | 2 - 25 % en poids |
| (e) ($CeO_2$ + $V_2O_5$) = | 1 - 25 % en poids |
| (f) ($ZrO_2$ + $V_2O_5$) = | 1 - 25 % en poids |

où le silicate à trois feuillets activé par un acide représente à chaque fois le reste du composant actif.

7. Utilisation selon la revendication 6, caractérisée par le fait que le rapport pondéral entre les oxydes métalliques des combinaisons binaires se situe dans les plages respectives suivantes:

| | |
|---|---|
| (a) $V_2O_5/TiO_2$ = | 0,001 - 0,2 |
| (b) $WO_3$ et/ou $MoO_3/TiO_2$ = | 0,1 - 0,25 |
| (c) $CeO_2/TiO_2$ = | 0,1 - 0,3 |
| (d) $V_2O_5/WO_3$ et/ou $MoO_3$ = | 0,1 - 2,5 |
| (e) $V_2O_5/CeO_2$ = | 0,1 - 1,0 |
| (f) $V_2O_5/ZrO_2$ = | 0,1 - 1,0. |

8. Utilisation selon l'une des revendications 1 à 5, caractérisée par le fait que les oxydes métalliques sont présents dans l'une des combinaisons ternaires suivantes:

| | |
|---|---|
| (a) ($TiO_2$ + $WO_3$ et/ou $MoO_3$ + $V_2O_5$) = | 10 - 80 % en poids |
| (b) ($TiO_2$ + $CeO_2$ + $V_2O_5$) = | 10 - 80 % en poids |
| (c) ($TiO_2$ + $ZrO_2$ + $V_2O_5$) = | 10 - 80 % en poids |
| (d) ($WO_3$ et/ou $MoO_3$ + $CeO_2$ + $V_2O_5$) = | 10 - 25 % en poids |
| (e) ($WO_3$ et/ou $MoO_3$ + $ZrO_2$ + $V_2O_5$) = | 10 - 25 % en poids |

où le silicate à trois feuillets activé par un acide représente à chaque fois le reste du composant actif.

9. Utilisation selon la revendication 8, caractérisée par le fait que le rapport pondéral entre les oxydes métalliques de la combinaison ternaire se situe dans les plages respectives suivantes:

| | | |
|---|---|---|
| (a) | $WO_3$ et/ou $MoO_3/TiO_2$ = | 0,01 - 0,25 |
| | $V_2O_5/TiO_2$ = | 0,01 - 0,11 |
| (b) | $CeO_2/TiO_2$ = | 0,05 - 0,23 |
| | $V_2O_5/TiO_2$ = | 0,01 - 0,11 |
| (c) | $ZrO_2/TiO_2$ = | 0,01 - 0,24 |
| | $V_2O_5/TiO_2$ = | 0,01 - 0,11 |
| (d) | $CeO_2/WO_3$ et/ou $MoO_3$ = | 0,1 - 5,0 |
| | $V_2O_5/WO_3$ et/ou $MoO_3$ = | 0,1 - 2,5 |
| (e) | $V_2O_5/WO_3$ et/ou $MoO_3$ = | 0,1 - 2,5 |
| | $ZrO_2/WO_3$ et/ou $MoO_3$ = | 0,1 - 10. |

10. Utilisation selon l'une des revendications 1 à 9, caractérisée par le fait que le catalyseur se présente sous la forme de corps façonnés, en particulier sous la forme de sphères, de pastilles, de comprimés extrudés, de corps en nids d'abeilles allongés ou plats, de barres, de tubes, d'anneaux, de roues de voiture ou de corps en selles.

11. Utilisation selon l'une des revendications 1 à 10, caractérisée par le fait que le catalyseur peut être obtenu par imprégnation du silicate à trois feuillets activé par un acide par une solution qui renferme un ou plusieurs des métaux cités sous forme de sels et/ou de composés complexes, et par calcination subséquente.

12. Utilisation selon l'une des revendications 1 à 10, caractérisée par le fait que le catalyseur peut être obtenu par mélange mécanique du silicate à trois feuillets activé par un acide avec un oxyde ou un sel d'un ou plusieurs des métaux cités, imprégnation subséquente par une solution, qui renferme un ou plusieurs des métaux cités sous forme de sels et/ou de composés complexes, et calcination subséquente.

13. Utilisation selon l'une des revendications 1 à 10, caractérisée par le fait que le catalyseur peut être obtenu par précipitation ou recristallisation d'au moins un composé qui renferme un ou plusieurs des métaux cités, en présence d'une suspension du silicate à trois feuillets activé par un acide, élimination par lavage des ions

étrangers et calcination subséquente.

14. Utilisation selon l'une des revendications 1 à 10, caractérisée par le fait que le catalyseur peut être obtenu par précipitation ou recristallisation d'au moins un composé qui renferme un ou plusieurs des métaux cités, en présence d'une suspension mixte du silicate à trois feuillets activé par un acide et d'un oxyde ou d'un sel d'un ou plusieurs des métaux cités, élimination par lavage des ions étrangers et calcination subséquente.

15. Utilisation selon l'une des revendications 1 à 14 pour la diminution par réduction du taux d'oxydes d'azote des gaz d'échappement de combustion, lesquels renferment, en dehors des composants usuels des gaz d'échappement, également des oxydes de soufre, où l'on utilise $NH_3$ comme agent réducteur.

16. Utilisation selon la revendication 15 dans la plage de températures allant de 200 à 600°C, de préférence, de 250 à 430°C, et pour une vitesse spatiale se situant dans la plage de 500 à 20 000 litres des gaz d'échappement de combustion par heure et par litre de catalyseur.

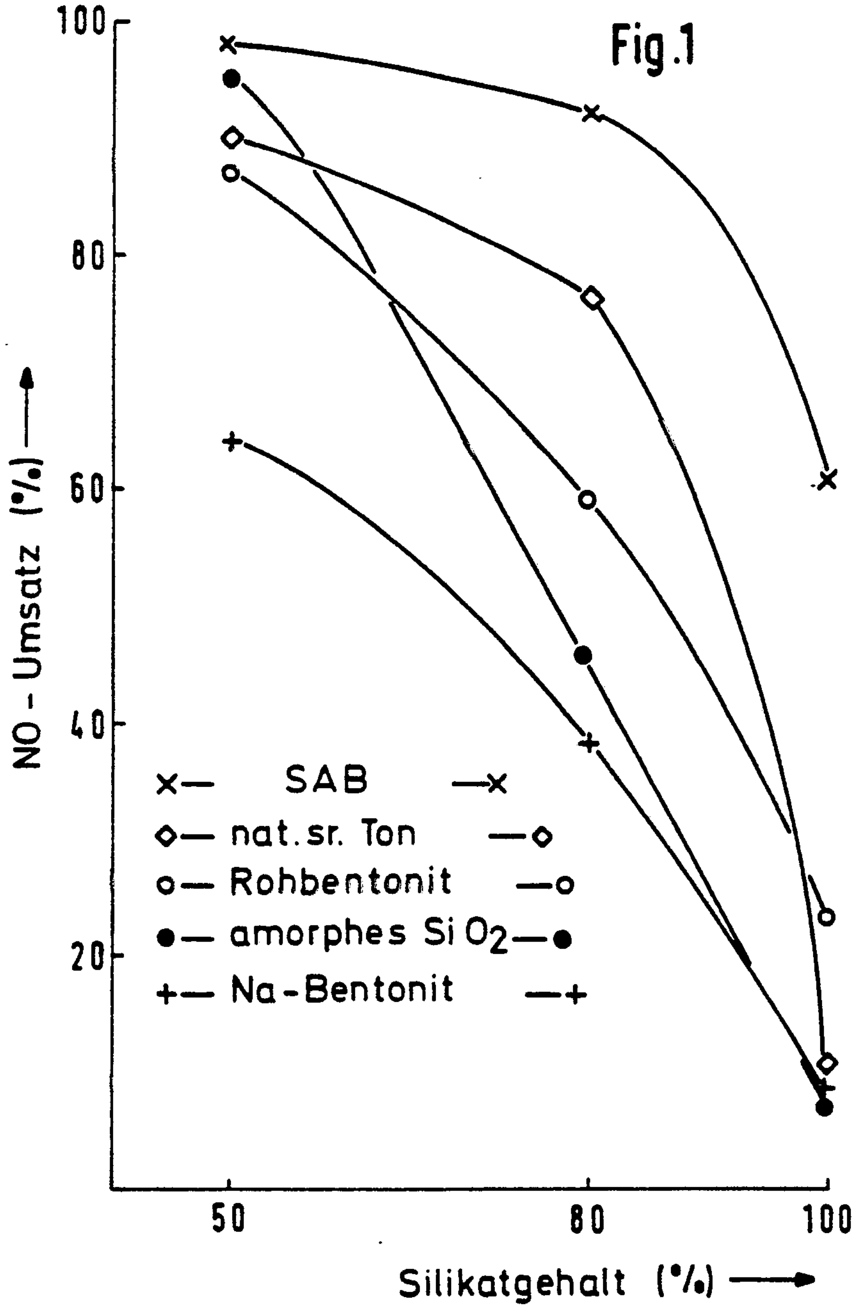
Fig.1
NO - Umsatz (%)
100
80
60
40
20
50
80
100
Silikatgehalt (%)
SAB
nat. sr. Ton
Rohbentonit
amorphes SiO2
Na-Bentonit

NH3 - Ausnutzung

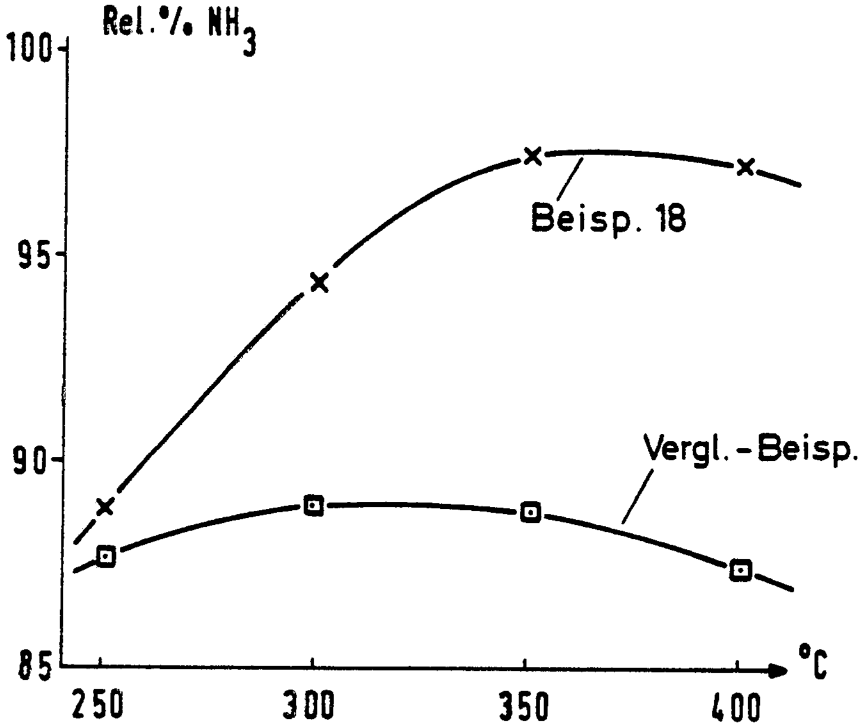


Fig.2